# EUROPEAN PATENT APPLICATION

(11) **EP 0 793 379 A2**
(43) Date of publication of application: **03.09.1997**
(21) Application number: 96308276.3
(22) Date of filing: 15.11.1996
(51) Int. Cl.: H04N 3/185

(54) **A method of attenuating unwanted electric field radiation and of a cathode ray tube display**

(30) Priority: 27.02.1996 JP 67072/96
(71) Applicant: TOTOKU ELECTRIC CO., LTD., Tokyo 169 (JP)
(72) Inventor: Hayashi, Shigeo, Chiisagata-gun (JP); Shiobara, Makoto, Nagaoka-shi, Niigata (JP)
(74) Representative: Calderbank, Thomas Roger

(57) **Abstract**

A method of attenuating an unwanted electric field radiation A2 caused by an electrostatic induction on an internal conductive coating 2 of a cathode ray tube 6 with a pulse voltage A which has a horizontal deflection period and is generated by a deflection circuit 4. In the method, a pulse voltage B which is reverse in polarity to the pulse voltage output A of the deflection circuit 4 in a cathode ray tube display 100 is impressed on an external conductive coating 1. It causes electrostatic induction producing a pulse voltage B1 which is reverse in polarity to a pulse voltage output A1 of the deflection yoke 5 in the deflection circuit 4 and applied to an internal conductive coating 2 through a electrostatic capacitance C2 existing between the internal conductive coating 2 and the external conductive coating 1 so that an unwanted electric field radiation A1 from the front screen of a cathode ray tube 6 can be attenuated.

## Description

The present invention relates to a method of attenuating unwanted electric field radiation which is radiated from the front screen of a cathode ray tube display and a cathode ray tube display which hardly radiates unwanted electric field from the front screen thereof.

There has been focused on an unwanted electric field radiated from a cathode ray tube display using a cathode ray tube. For example, an unwanted radiation of a low-frequency ( 5 Hz to 400 kHz ) electric field is banned by various regulations including TCO and MPR (SSI) of Sweden. It is said that electromagnetic waves derived from the unwanted electric field may be hazardous to human and animal bodies as well as cause faults or errors in peripheral electronic devices.

One radiation of an unwanted electric field generated by a cathode ray tube display is caused by a high-voltage ripple which has a horizontal deflection period and is generated in a high voltage circuit for supplying a high voltage to an anode electrode of the cathode ray tube. Another radiation of an unwanted electric field generated by a cathode ray tube display is caused by an electrostatic induction with a pulse voltage which is output from a deflection circuit and appeares at a horizontal deflection coil and has a horizontal deflection period. This invention eliminates the radiation caused by an electrostatic induction with a pulse voltage generated in the horizontal deflection coil.

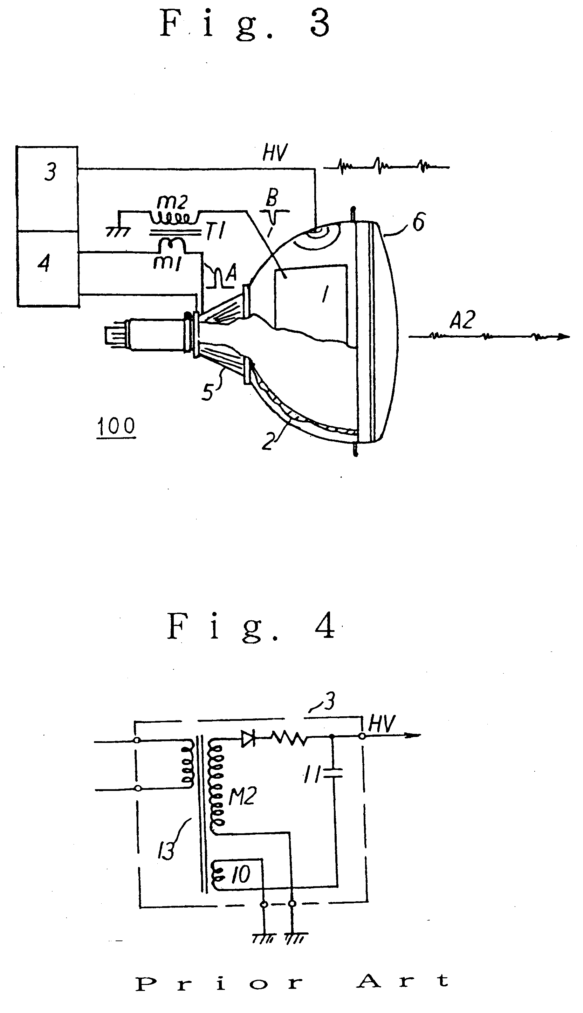

A conventional method of attenuating the radiation resulting from high-voltage ripple which has a horizontal deflection period and is generated in a high voltage circuit is disclosed by the applicant in Japanese Patent Application 104893/1994 (Japanese Patent Laid-open Publication 298169/1995). This conventionnal method of attenuating an unwanted electric field will be explained referring to Fig.4. According to the method, a winding 10 is provided, as a means for producing a negative pulse which has a horizontal deflection period, at the secondary side M2 of a flyback transformer 13 which is a major component of a high voltage circuit 3. And the circuit is arranged in which the negative pulse produced by the winding 10 of the negative pulse generating means is superimposed on a high voltage HV through a smoothing capacitor 11 connected to the output of the flyback transformer 13. Thus the high-voltage ripple which has a horizontal deflection period is calcelled. This arrangement also allows an unwanted electric field generated by a pulse voltage which has a horizontal deflection period and generated from a horizontal deflection coil which is a member of a deflection yoke and so on to be attenuated. As the result, an unwanted electric field radiated from the cathode ray tube display will be attenuated.

When the conventional unwanted electric field attenuating method is used to a cathode ray tube display includes a deflection circuit and a high voltage circuit separately, the horizontal deflection period pulses are generated respectively. And the horizontal deflection period pulse voltages of the two separate circuits are determined independently for optimum setting and different from each other in the pulse width, amplitude, and phase.

More specifically, even if the two, deflection and high voltage, circuits are driven concurrently by a single drive pulse signal, their horizontal deflection period pulse voltages generated respectively in each circuit are not compatible in the pulse width, amplitude, and phase due to difference between their components or operating conditions. For example, when the high voltage circuit employs as an output element an FET which has no storage time, its horizontal deflection period pulse voltage will resultantly be out of phase with the horizontal deflection period pulse voltage of the deflection circuit.

In the conventional unwanted electric field attenuating method, while an unwanted radiation of high voltage ripple in the horizontal deflection period is rationally attenuated, another unwanted radiation caused by the electrostatic induction with the horizontal deflection period pulse voltage of the deflection circuit including a deflection yoke will hardly be reduced.

The unwanted electric field which is caused by the electrostatic induction with a pulse voltage which has a horizontal deflection period and generated from the deflection circuit including the deflection yoke and radiated from the front screen of the cathode ray tube display will be explained referring to Fig.3. As shown, a deflection yoke 5 is mounted on a cathode ray tube 6 and in a normal drive mode loaded with a horizontal deflection period pulse voltage which has a waveform denoted by A in Fig.3. As the deflection yoke 5 is directly mounted to the cathode ray tube 6, a electrostatic induction ocurres at the internal conductive coating 2 of the cathode ray tube 6 by electrostatic induction coupling with a pulse voltage in the deflection yoke 5. Accordingly, a pulse voltage with a wave form denoted by A1 in Fig.2 is radiated as the unwanted electric field from the front screen of the cathode ray tube 6.

It is an object of the invention, for eliminating the foregoing problem, to provide a method for attenuating an unwanted electric field radiation caused by electrostatic induction on the internal conductive coating with a pulse voltage which is produced by the deflection yoke in a deflection circuit and has a horizontal deflection period, and to provide a cathode ray tube display which hardly radiates an unwanted electric field from the front screen thereof.

The first aspect of the present invention, a pulse voltage B1 which is reverse in polarity to and synchronizes with a pulse voltage output A1 of the deflection circuit 4 in a cathode ray tube display 100 is produced and applied to the internal conductive coating 2 through a electrostatic capacitance C2 formed between the internal conductive coating 2 and the external conductive coating 1 by impressing a pulse voltage B which is reverse in polarity to and synchronizes with a pulse voltage output A of the deflection circuit 4 on the external conductive coating 1 so as to cancel a ripple voltage A1 which has the horizontal deflection period and generated from the deflection yoke 5. As the result, the unwanted electric field radiation A2 from the front screen of the cathode ray tube display 100 can be attenuated.

The pulse voltage B which is reverse in polarity to and synchronizes with the pulse voltage output A of the deflection circuit 4 may be impressed on a conductive film placed directly over the external conductive coating 1.

The second aspect of the present invention, a cathode ray tube display 100 with a cathode ray tube 6 having an internal conductive coating 2 and an external conductive coating 1 and with a deflection yoke 5 mounted on the cathode ray tube 6, characterized in that the cathode ray tube display 100 is comprised with a reverse pulse voltage impressing means (m2, C4) which impresses on the internal conductive coating 2 through an electrostatic capacitance C2 existing between the internal conductive coating 2 and the external conductive coating 1 a pulse voltage B1 which is reverse in polarity to a pulse voltage A1 applied to an internal conductive coating 2 through an electrostatic capacitance C1 formed between the deflection yoke 5 and the internal conductive coating 2 is provided.

It is preferable that the reverse pulse voltage impressing means (m2, C4) includes a variable resistor VR1 for controlling the amplitude of the pulse voltage B1.

As a pulse voltage B which is reverse in polarity to and synchronizes with a pulse voltage output A of the deflection circuit 4 in a cathode ray tube display 100 is impressed on the external conductive coating 1, it causes electrostatic induction producing a pulse voltage B1 which is reverse in polarity to and synchronizes with a pulse voltage output A1 of the deflection circuit 4 and applied to the internal conductive coating 2 through a electrostatic capacitance C2 formed between the internal conductive coating 2 and the external conductive coating 1. Accordingly, the unwanted electric field radiation A2 from the front screen of the cathode ray tube display 100 can be attenuated.

In the drawings
Fig.1 is a circuit diagram showing a primary part of the present invention;
Fig.2 is a circuit diagram equivalent to that of Fig.1;
Fig.3 is a circuit diagram explaining unwanted electric field derived from a deflection circuit; and
Fig.4 is a circuit diagram showing a prior art.

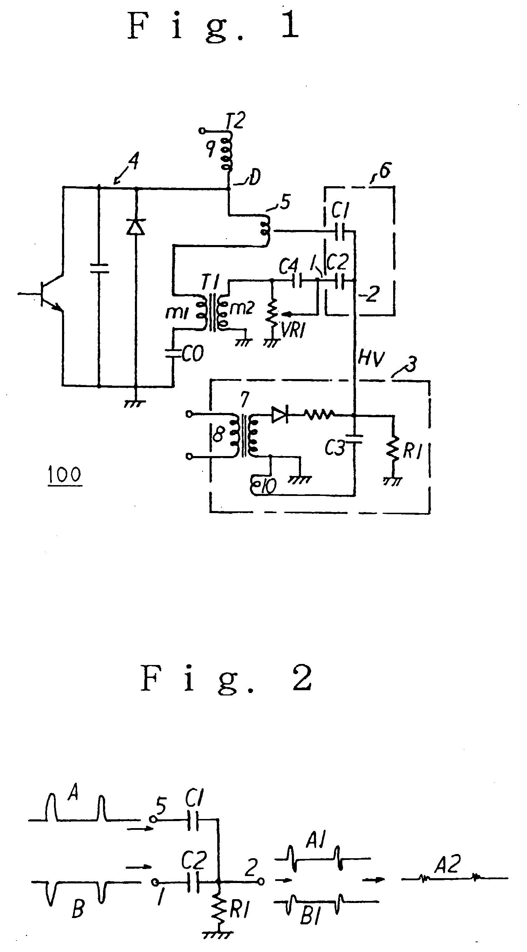

The present invention will be described referring to Fig.1. As shown, a deflection yoke 5 is connected at one end to a joint point D between the primary coil 9 of a horizontal output transformer T2 and a deflection circuit 4, and at the other end to the ground via the primary coil m1 of a cancel transformer T1 and an S-shaped capacitor C0. Denoted by 6 is a cathode ray tube in which a pulse voltage across the deflection yoke 5 is applied by electrostatic induction to an internal conductive coating 2 through an electrostatic capacitance C1 formed between the deflection yoke 5 and the internal conductive coating 2 of the cathode ray tube 6. Also, a voltage which is in reverse phase with the pulse voltage from the deflection yoke 5 is applied by electrostatic induction to the internal conductive coating 2 through a electrostatic capacitance C2 formed between the internal conductive coating 2 and an external conductive coating 1.

The secondary coil of the cancel transformer T1 is denoted by m2 and connected at one end to the ground, and the other end of the secondary coil m2 is also grounded via a variable resistor VR1 and connected through a capacitor C4 to the external conductive coating 1 of the cathode ray tube 6. Accordingly, the amplitude of the pulse voltage applied by electrostatic induction to the internal conductive coating 2 of the cathode ray tube 6 can be adjusted by controlling the variable resistor VR1. A high voltage circuit 3 contains a flyback transformer 7, a smoothing capacitor C3, and a bleeder resistor R1 as is provided for feeding a high voltage HV to an anode connected to the internal conductive coating 2 of the cathode ray tube 6.

The action of the present invention will be explained in conjunction with Fig.2 which is equivalent to the diagram of Fig.1. Shown are the deflection yoke 5, the internal conductive coating 2 of the cathode ray tube 6, the bleeder resistor R1 in the flyback transformer 7, and the capacitance C1 existing between the deflection yoke 5 and the internal conductive coating 2 of the cathode ray tube 6. As the capacitor C1 and the bleeder resistor R1 form a differential circuit, a pulse voltage having a waveform A1 is electrostatic induced at the internal conductive coating 2 by application of the pulse voltage of a waveform A produced with the deflection yoke 5 and an unwanted electric field of a waveform A1 will be radiated from the front screen of the cathode ray tube 6.

Also, shown are the external conductive coating 1 of the cathode ray tube 6 and the static capacitance C2 existing between the external conductive coating 1 and the internal conductive coating 2. When a negative pulse voltage which has a waveform B and is reverse in polarity to and synchronizes with the pulse voltage phase of the waveform A is produced across the secondary coil m2 of the cancel transformer T1 and applied to the external conductive coating 1, a waveform B1 of pulse voltage is electrostatic induced at the internal conductive coating 2 due to the action of a differential circuit composed of the capacitor C2 and the bleeder resistor R1.

Consequently, two different pulse voltages of the waveform A1 and the waveform B1 which are opposite to and synchronous with each other in the polarity are developed at the internal conductive coating 2 of the cathode ray tube 6 by the electrostatic induction. By controlling the amplitude of the pulse voltage of the waveform B with the variable resistor VR1 for tailoring the waveform B1, an unwanted electric field radiated from the front screen of the cathode ray tube 6 can be attenuated. More specifically, the unwanted electric field radiated from the front screen of the cathode ray tube 6 is suppressed to as a low level as a waveform A2.

According to the present invention, the pulse voltage B1 of which polarity is reverse to that of the output of the deflection yoke 5 is applied by electrostatic induction to the internal conductive coating 2 through the static capacitance C2 formed between the internal conductive coating 2 and the external conductive coating 1 of the cathode ray tube 6. As a result, the unwanted electric field radiation A2 from the front screen of the cathode ray tube 6 is attenuated to a negligible level by the electrostatic induction at the internal conductive coating 2 of the cathode ray tube 6. The radiation derived from a pulse voltage A1 electrostatic induced on the internal conductive coating 2 from the pulse voltage output A produced by the deflection yoke 5 during the horizontal deflection period, which is hardly eliminated by any conventional method, will be reduced.

Although the external conductive coating 1 of the cathode ray tube 6 is used as an electrode of the electrostatic capacitance C2 in the prescribed embodiment, the electrode may be prepared separately by having a given pattern of a conductive film placed directly on the external conductive coating 1.

It would be understood that the unwanted electric field attenuating method of the present invention is successfully applicable to a CRT display in which a high voltage HV is supplied to the cathode ray tube 6 by a high-voltage power unit arranged not synchronous with the horizontal period without using the flyback transformer 7.

As set forth above, in a display with the cathode ray tube, an unwanted electric field which is electrostatic induced from the pulse voltage produced by the deflection yoke in the horizontal deflection period and radiated from the cathode ray tube can successfully be attenuated by a simple means, namely, by applying to the external conductive coating of the cathode ray tube a pulse voltage of which polarity is reverse to that of the pulse voltage output of the deflection yoke. Accordingly, the present invention allows the unwanted electric field radiated from the cathode ray tube to be prevented from causing electromagnetic faults in peripheral electronic devices and affecting the health of a human or animal body, thus being advantageous in actual use.

## Claims

1. A method of attenuating unwanted electric field radiation from the front screen of cathode ray tube display 100 equipped with a cathode ray tube 6 having an internal conductive coating 2 and an external conductive coating 1, characterized in that a pulse voltage B1 which is reverse in polarity to a pulse voltage output A1 of a deflection circuit 4 in the cathode ray tube display 100 is produced and applied to the internal conductive coating 2 through a electrostatic capacitance C2 existing between the internal conductive coating 2 and the external conductive coating 1 by impressing a pulse voltage B which is reverse in polarity to a pulse voltage output A of the deflection circuit 4 on the external conductive coating 1 so that the unwanted electric field radiation A2 from the front screen of the cathode ray tube display 100 is attenuated.

2. A method of attenuating unwanted electric field radiation according to claim 1, wherein the reverse polarity pulse voltage B is impressed on a conductive film placed directly over the external conductive coating 1.

3. A cathode ray tube display 100 with a cathode ray tube 6 having an internal conductive coating 2 and an external conductive coating 1 and with a deflection yoke 5 mounted on the cathode ray tube 6, characterized in that the cathode ray tube display 100 is comprised with a reverse pulse voltage impressing means (m2, C4) which impresses on the internal conductive coating 2 through an electrostatic capacitance C2 existing between the internal conductive coating 2 and the external conductive coating 1 a pulse voltage B1 which is reverse in polarity to a pulse voltage A1 applied to an internal conductive coating 2 through an electrostatic capacitance C1 formed between the deflection yoke 5 and the internal conductive coating 2.

4. A cathode ray tube display 100 according to claim 3, wherein the reverse pulse voltage impressing means (m2, C4) includes a variable resistor VR1 for controlling the amplitude of the pulse voltage B1.
